# EUROPEAN PATENT APPLICATION

(11) **EP 0 807 635 A1**
(43) Date of publication of application: **19.11.1997**
(21) Application number: 97107749.0
(22) Date of filing: 13.05.1997
(51) Int. Cl.: C07F 9/38, C02F 5/14

(54) **Water treatment compositions**

(30) Priority: 15.05.1996 GB 9610112
(71) Applicant: ALBRIGHT & WILSON UK LIMITED, Oldbury, Warley, West Midlands B68 0NN (GB)
(72) Inventor: Woodward, Gary, Kidderminster, Worcestershire DY10 3AH (GB); Davis, Keith Philip, Stourbridge, West Midlands DY7 6BP (GB); Walker, David Robert Edward, Nr. Droitwich, Worcestershire WR9 7DZ (GB); Graham, Mark Stephen, Bromsgrove, Worcestershire B61 7DA (GB); Chesworth, Timothy James, Redditch, Worcestershire B98 8QN (GB)
(74) Representative: Savidge, Roger Gordon Madgwick

(57) **Abstract**

The reaction of a water soluble phosphite salt with a water soluble fumarate salt in aqueous solution and in the presence of a free radical initiator provides a synergistic mixture of a phosphonosuccinate with from 0.1 to 5% by weight of a salt of 1-phosphono-1,2,3,4-tetracarboxybutane, which mixture is superior to conventionally prepared phosphonosuccinates and to maleate/phosphite reaction products as a corrosion and scale inhibitor for aqueous systems and as a deflocculant and sequestrant.

## Description

The present invention relates to compositions suitable for use in water treatment as corrosion and scale inhibitors. The compositions are also useful as deflocculants, cement setting retardants and sequestrants, and may be used to provide anticorrosion pigments for use in paints.

Phosphonosuccinic acid, H₂O₃PCHCOOHCH₂COOH and its salts have been made by reacting an alkyl phosphite ester with an alkyl maleate in the presence of a base catalyst in an anhydrous medium, and saponifying the resulting phosphonosuccinate ester. It is known to be capable, when present in low concentrations (eg. 20 to 100 ppm) of reducing scaling in scale forming water systems and the corrosion of ferrous metals in corrosive, calcium-containing water systems. However it is expensive to make by the above route and is less effective than other, cheaper agents.

GB1458235 purports to make a phosphonated oligomer of acrylic acid by reacting phosphorous acid with acrylic acid in water and in the presence of a persulphate free radical source. However it has been shown that under the conditions described, the product is predominately polyacrylate. Phosphorus NMR confirms that only traces of phosphonate are formed.

EP-A-0491391 describes a reaction of sodium phosphite with active olefins such as sodium maleate in alkaline solution in the presence of a peroxide or persalt. The reaction forms a mixture consisting predominantly of phosphonosuccinate and 1-phosphono-1,2,3,4-tetracarboxy butane, (the phosphonated dimer of succinic acid which is referred to herein as "the dimer") together with sodium phosphate and traces of higher oligomers of succinic acid. The product is greatly superior to conventional phosphonosuccinic acid as a corrosion inhibitor. EP-A-0569731 showed that the dimer is a significantly more effective corrosion inhibitor than phosphonosuccinic acid, but that the mixture of the two is synergistic. The mixture obtained in the above reaction typically has a mean degree of polymerisation of about 1.2 to 1.3 corresponding to about 15 to 20% by weight of dimer. This fortuitously corresponds to the optimum synergistic effect, as demonstrated in Example 6 of EP-A-0569731.

Both EP-A-0491391 and EP-A-0569731 described the reaction of phosphite salts with olefins generally, but do not recommend the use of fumaric acid or its salts. EP-A-0491391 states that fumaric acid is comparatively unreactive, and EP-A-0569731 states that fumarate does not react to a significant extent under normal reaction conditions.

We have found that when a fumarate salt is reacted with a phosphite salt in an aqueous alkaline medium containing a free radical initiator, a product is formed consisting predominantly of phosphonosuccinate, together with only a trace of dimer (between about 0.5 and about 2% by weight of the total solids). Because the reaction is comparatively slower the competing reaction to form phosphate can give rise to high levels of the latter, which have been found to affect the stability of the product. We have discovered that the problem can be overcome by using a relatively dilute initiator solution and/or by adding the initiator sufficiently slowly to the mixture.

Surprisingly, the phosphonosuccinate obtained from the phosophonation of fumarate, was found superior to the product previously described in EP-A-0491391 and EP-A-0569731, obtained by phosphonating maleate salts, when the two were compared for use as a corrosion and scaling inhibitor in alkaline, hard water systems. Such systems have posed problems which, until now conventional water treatment agents have proved inadequate to cure. These discoveries are directly contrary to the clear teaching of the above cited prior art. The product is a particularly effective scaling inhibitor in hard water (eg. above 200ppm Ca) and at high pH (eg above 8). It was also found to be a substantially superior corrosion inhibitor compared to phosphonosuccinic acid prepared by the more expensive ester route, over a wide range of conditions, but especially at relatively high calcium concentrations and pH. The product has been found to be an effective deflocculant for deflocculating suspensions of fine solids, such as titanium oxide, and a useful sequestrant, eg for addition to detergent formulations.

Our invention therefore provides a method of making a water treatment agent which comprises reacting a water soluble phosphite salt with a fumarate salt in water in the presence of a free radical initiator.

According to a second embodiment the initiator is added to a synergistic mixture of the phosphite and the fumarate at a rate and for a time sufficient to form a yield of phosphonosuccinate greater than 80% based on, the weight of phosphite employed, but not sufficiently rapidly to form more than 8% by weight phosphate based on the weight of phosphite employed.

According to a third embodiment the invention provides a mixture of a phosphonosuccinate salt with from 0.1 to 5% by weight, based on the total weight of the mixture of a 1-phosphono-1,2,3,4-tetracarboxy butane salt.

According to a fourth embodiment said mixture contains less than 8% by weight of phosphate based on the total weight of the mixture.

According to a fifth embodiment the invention provides the use in water treatment or as a deflocculant, cement setting retardant, or sequestrant of a composition prepared according to said first or second embodiments and/or comprising a mixture according to said third or fourth embodiments.

The method of our invention according to the first embodiment requires the use of an at least sparingly water soluble salt of fumaric acid such as an alkali metal or ammonium salt. Generally preferred are sodium and potassium salts. Similarly the phosphite is preferably a water soluble salt of eg. an alkali metal or ammonium, preferably sodium or potassium.

The reagents are preferably used in substantially stochiometric proportions. Small excesses of either reagent can be tolerated but result in a reduction of efficiency with respect to the agent in excess. For commercial reasons we prefer that neither reagent should be present in a stoichiometric excess of more than about 10% by weight, although higher excesses are technically possible.

The initiator is preferably hydrogen peroxide although other free radical sources may be used, such as hydroperoxides, chlorine dioxide, sodium or other alkali metal persulphate, percarbonate, chlorate or hypochlorite, azo compounds such as 4,4¹-azobiscyanovaleric acid, electrolysis, ultra violet or other ionising radiation or ultrasound.

The initiator is preferably supplied to the reaction medium at a rate sufficient to maintain the reaction, at least until a significant yield of product has been obtained.

In general for economical operation the yield should be greater than 50% preferably greater than 70%, more preferably greater than 80%, eg. greater than 90% and the reaction should take place in under 30 hours, preferably less than 25 hours, e.g. 9 to 20 hours.

The reaction medium is an aqueous medium preferably containing more than 30% more preferably more than 50%, especially more than 60%, eg. 60 to 70% by weight of the reagents. Concentrations above 70% solids are generally undesirably viscous. A preferred range is 63 to 68% solids.

The initiator is preferably added to the reaction medium continuously or intermittently at a rate sufficient to maintain the reaction until it is substantially complete. The rate of addition of initiator is controlled to be sufficiently high to avoid an uneconomically slow reaction, but not so high as to cause substantial contamination of the product by formation of phosphate. To prevent the latter we prefer to use as the initiator a relatively dilute hydrogen peroxide solution having a strength less than 10% by volume on volume, e.g. 0.5 to 5%, more preferably 1 to 4%, especially 2 to 3%. The use of a dilute solution of initiator enables the rate of addition of the peroxide to be more readily controlled.

The dilute peroxide is typically added at a rate of from 2 to 10 cm³ hr⁻¹ mol⁻¹ based on fumarate, preferably 5 to 8 e.g. 6 to 7 over a period of from 5 to 40 hours. However to minimise phosphate formation it is preferred to reduce the rate of peroxide addition after the reaction is about 70% complete (usually after 8 to 10 hours) to from 1 to 5 cm³ hr⁻¹ mol⁻¹ e.g 2 to 4. The reaction may then be continued for a further 5 to 10 hours e.g. until yields of greater than 90% have been achieved. The optimum dose rate will depend on the initiator employed and the concentration at which it is added as well as the concentration of the reagent , and the pH and temperature of the reaction mixture. The above recommended rates apply to dilute peroxide added to a reaction mixture containing 65% solids refluxing under atmospheric pressure at pH10.

The reaction is desirably carried out at elevated temperature and preferably at reflux temperature. The reflux may be adjusted to maintain the preferred water concentration of the slurry. We prefer that the reaction is carried out in an inert atmosphere, e.g. under a nitrogen blanket.

It is possible to carry out the reaction at temperatures above the normal boiling point of the mixture in an autoclave, eg. temperatures up to 250°C.

The pH of the reaction mixture is preferably alkaline. Although it is technically possible to use a pH as low as 6, or even 5.5, the reaction is very slow at any pH below 7 and requires pH above 7.5 to get to more than 90% completion in a realistic time. The preferred pH is 8 to 12, typically 9 to 11. Higher pH generally gives a faster reaction but a pH above 10.5 may render the product undesirably alkaline for many purposes. Completion of the reaction may be monitored by ³¹P NMR in D₂O. In this way the rate of formation of phosphonate and phosphate may be checked and the addition rate of initiator adjusted where necessary to match the reaction conditions. We prefer to include a heel of from 1 to 10% by weight of the total mixture of product from a previous batch.

The aforementioned detailed description applies specifically to batch preparations but may readily be adapted to continuous or semi-continuous operation including preparation in a pipe or loop reactor. It is also possible to utilise fluidised bed reactors.

The mixture according to the third or fourth embodiments of the invention comprises phosphonosuccinic acid or its salts and from 0.1 to 5% by weight of total solids, preferably from 0.2 to 4% especially 0.5 to 2% of 1-phosphono-1,2,3,4-tetracarboxy butane (the dimer).

The salt may, preferably, be a water soluble salt such as an alkali metal (eg. sodium or potassium) or an ammonium salt. Alternatively it may be a calcium salt or other alkaline earth metal or transition metal. e.g. barium, magnesium, zinc, aluminium, iron, copper, nickel or cobalt salt.

The water soluble salts are useful for water treatment and the water insoluble salts are of value as anti-corrosive pigments, e.g. for incorporation in paints and coating compositions.

The mixture preferably contains less than 8% phosphate, expressed as disodium phosphate, by weight based on total solids, more preferably less than 7%, especially less than 7.5%. Typically the phosphate is present in proportions between 4 and 6%. In general we prefer that less than 3.5 mole% of the phosphorus in the mixture is present as phosphate, and especially less than 3 mole %, e.g. 0.5 to 2.5 mole%.

According to the fourth embodiment our invention provides a method of treating water particularly water containing more than 25ppm of calcium and/or barium, especially more than 50ppm. eg. more than 100ppm more especially more than 200ppm, and/or pH greater than 7.5, especially pH greater than 8.

For example the compounds and mixtures of the invention may be used in squeeze treatment of oil wells in conjunction with calcium salts, or may be added to drilling muds or to oilfield injection water, produced water or water for hydrostatic testing, as well as to various industrial cooling waters and process waters and to water for use in central heating systems. They may be used to inhibit barium sulphate scale.

Treatment of boreholes, eg. to prevent formation of BaSO₄ scale when sea water is injected into oil bearing strata containing high levels of barium typically entails impregnating the formation in the environs of the hole with a calcium salt of the inhibitor, which is subsequently leached into any aqueous system circulating in the hole to provide controlled slow release.

For example in oil wells the hole is flushed out with aqueous surfactant to provide a water wettable surface and then impregnated with a solution of the inhibitor. The calcium salt is formed in situ either by calcium in the formation, where the latter comprises limestone, or by subsequent treatment of the hole with an aqueous calcium salt, e.g. where the formation comprises sandstone.

Alternatively the compositions may be used, for example, to treat boiler water, water used in evaporative cooling systems, water in heat exchange systems including cooling water and water in central heating systems, process water used in chemical, metallurgical and other manufacturing operations, oil well injection and produced water, water used in hydrostatic testing and water for swimming pools, and for air conditioning.

The compound and mixtures are particularly useful in treating chlorinated water systems for which many threshold agents are ineffective. Effective concentrations may typically range from 0.1 to 300 ppm depending on the nature of the aqueous system but are usually less than 100ppm and generally less than 50ppm, preferably 0.5 to 20 ppm especially 1 to 10 ppm e.g. 1.5 to 4 ppm.

The compositions are effective at inhibiting the corrosion of ferrous metals including mild steel and also of aluminium and its alloys. It can inhibit the formation of calcium carbonate or calcium sulphate scale as well as barium and strontium scales.

According to a further embodiment our invention provides a corrosion inhibiting pigment which is a solid composition which may be prepared by reacting a concentrated aqueous solution of a water soluble corrosion inhibitor according to the invention with a base or salt of calcium, zinc, barium, aluminium or other polyvalent metal and precipitating a solid salt of a polyvalent metal.

According to a further embodiment our invention provides a corrosion inhibiting coating composition containing a pigment according to the invention.

The corrosion inhibiting pigment may be dissolved or dispersed in an anti-corrosive paint, varnish, enamel, lacquer, or other coating formulation. The formulation may comprise a volatile liquid vehicle, such as water or a volatile organic solvent including petroleum spirit, turpentine, ketones, esters and/or aromatic hydrocarbon solvent, and/or a drying oil, such as linseed oil, soya oil, tung oil and dehydrated castor oil, which may optionally be dissolved in said volatile organic solvent or emulsified in said water.

The formulation typically may also comprise a resin, eg a polyester, urea formaldehyde, melamine, acrylic, polyurethane, vinyl chloride, vinyl acetate, phenolic or epoxy resin dissolved or dispersed therein and/or a dispersed pigment. We prefer that the pigment should be or should comprise other corrosion inhibiting pigments such as red lead, potassium zinc chromate, metallic zinc or aluminium powder or zinc oxide and/or that the formulation should contain one or more of the other corrosion inhibitors referred to above in addition to the corrosion inhibiting pigment of the invention.

The coating compositions may additionally contain any of the conventional paint ingredients, including pigments such as titanium oxide, iron oxide, carbon black, phthalocynanine pigments or aluminium stearate, chlorinated rubber, polystyrene, silicone, asphalt, wetting agents, dispersants, emulsifiers, biocides, flocculants, marine antifoulants, antifoams, viscosifiers, fire retardants, flourescers, aerosol propellants, talc, clay and/or plasticisers.

Alternatively the water soluble corrosion inhibitors of the invention may be used to provide a corrosion inhibiting treatment for metal surfaces such as steel, aluminium and aluminium alloys after any machining and prior to storage, coating, electroplating, polishing or etching. Typically the work is coated with an aqueous solution containing at least an operative amount of said corrosion inhibitor eg, 10 to 500 ppm preferably 25 to 300 eg 20 to 200 especially 25 to 100, more especially 30 to 80 ppm.

After contacting with the corrosion inhibiting solution the work may be rinsed and/or subjected to one or more coating or finishing operations such as resin coating, lacquering, enamelling, painting, electrophoretic coating, spattering, vapour deposition, electrodeposition, etching chemical or electrical polishing or may be put aside for storage.

The work may be greased for storage, but an advantage of the treatment is that greasing and hence subsequent degreasing may be avoided.

The composition of the invention may be used to deflocculate dispersed or suspended solids in liquid media. The dispersed or suspended solid may be any particulate solid which is sufficiently chemically inert to be dispersed or suspended in the aqueous medium. The particles are preferably inorganic, and substantially water insoluble eg. a mineral such as an aluminosilicate or metal ore. Examples include tale, calcite, barite, mica, clays such as china clay and bentonite, shales, haematite, bauxite, magnetite, galena, copper or iron pyrites, coal, zeolite, titanium oxide and zinc oxide. The invention also covers the suspension of soluble or sparingly soluble solids in saturated aqueous solutions thereof.

The solid may, for example, be a detergent builder or fabric conditioner, a clay for use in the manufacture of ceramic articles, or an abrasive, pigment, dye, pesticide, cosmetic or pharmaceutical, or a weighting agent for oil well drilling muds. The dispersed particles may alternatively comprise a polymer, resin or latex, eg for use in paints and printing inks.

The particle size of the solid is preferably sufficiently small to enable the particles to the readily dispersed or suspended. For example we prefer that the particles size is less than 1mm eg less than 0.5mm preferably 0.5 to 100 micron especially 1 to 50 microns.

The proportions of solid may be from 1 to 90% by weight based on the total weight of the composition. More usually the composition comprises from 10 to 90% preferably 20 to 70%, eg 30 to 65% by weight of suspended solid.

The liquid medium may be water, optionally containing a dispersant such as a dilute surfactant or lignin sulphonate and/or suspending agent such as carboxymethyl cellulose or polyvinyl pyrrolidone. The composition may, for example, be in the form of a mechanical dispersion, slurry, paste, clay or mud, or a sedimented dispersion capable of redispersion by shaking or stirring.

The pH of the liquid medium is usually neutral or alkaline eg. greater than 7, preferably 8 to 14, especially 9 to 12.

The liquid medium may optionally contain water miscible or emulsifiable organic solvents, but they are not normally needed and unless specifically required, eg where the suspension is intended for use as a paint composition, they are preferably absent.

The invention is of particular value in providing mobile highly concentrated slurries of pigments, and especially of titanium oxide, for use as or in paints and other coating compositions.

According to a specific embodiment there is provided a coating composition comprising: an aqueous based liquid vehicle, an organic binder comprising a drying oil or resin emulsified or interspersed with said liquid vehicle; particles or a pigment, which in the absence of a deflocculant, have a tendency to flocculate and which are suspended or dispersed in said liquid vehicle; and a water soluble composition of the invention in an amount sufficient to inhibit the flocculation of the pigment.

The preferred pigment is titanium oxide but any other pigment which has a tendency to flocculate may be used. For example, other useful pigments include, iron oxide, carbon black, phthalocyanine pigments or aluminium stearate. The pigment may comprise corrosion inhibiting pigments such as read lead, potassium zinc chromate, metallic zinc or aluminium powder or zinc oxide or zinc, calcium or aluminium phosphate, or citrates.

The composition may be added to cement compositions including portland cement, hydraulic lime, pozzolan, slag, bauxite, ciment fondue, dental cement, gypsum, plaster, concrete, grout and fillers to prevent premature setting.

The compositions are useful as sequestrants, for use as builders, stain removers and peroxide stabilisers in detergent and bleach preparations. The composition may typically be present in the detergent in concentrations from 0.01 to 20%, usually 0.1 to 10% eg. 0.5 to 5% based on the weight of the formulation. The detergent may contain from 2 to 50% by weight surfactants, including any of the surfactants listed below, preferably 4 to 40% especially 5 to 30% eg. 8 to 20%. The detergent preferably contains from 5 to 50% by weight of builders such as sodium tripolyphosphate, sodium pyrophosphate, zeolite or sodium citrate, and an optical bleach and soil suspending agent in minor amounts eg. 0.01 to 2% each.

Products according to the invention may be used in combination with other water treatment agents including: surfactants, such as anionic surfactants (eg C₁₀₋₂₀ alkyl benzene sulphonates, C₁₀₋₂ₒ alkyl sulphates, C₁₀₋₂₀ alkyl 1 to 25 mole ether sulphates, C₁₀₋₂₀ parafin sulphonates, C₁₀₋₂₀ soaps, C₁₀₋₂₀ alkyl phenol sulphates, sulphosuccinates, sulphosuccinamates, lignin sulphonates, fatty ester sulphonates, C₁₀₋₂₀ alkyl phenyl ether sulphates, C₁₀₋₂₀ alkyl ethanolamide sulphates, C₁₀₋₂₀ alpha sulpho fatty acid salts, C₁₀₋₂₀ acyl sarcosinates, isethionates, C₁₀₋₂₀ acyl taurides, C₁₀₋₂₀ alkyl hydrogen phosphates), non-ionic surfactants (e.g. ethoxylated and/or propoxylated C₁₀₋₂₀ alcohols, ethoxylated and/or propoxylated C₁₀₋₂₀ carboxylic acids, alkanolamides, amine oxides, and/or C₁₀₋₂₀ acyl sorbitan and/or glyceryl ethoxylates) amphoteric surfactants (eg. betaines, sulphobetaines, and/or quaternised imidazolines) and/or cationic surfactants (eg. benzalkonium salts, C₁₀₋₂₀ alkyl trimethyl ammnonium salts, and/or C₁₀₋₂₀ alkyl trimethyl or tris(hydroxymethyl) phosphonium salts); sequestrants, chelating agents, corrosion inhibitors and/or other threshold agents (eg. sodium tripolyphosphate, sodium ethylenediamine tetracetate, sodium nitrilo triacetate, tetra potassium pyrophosphate, acetodiphosphonic acid and its salts, ammonium trismethylene phosphonic acid and its salts, ethylenediamine tetrakis (methylene phosphonic) acid and its salts); tolytriazole and mixtures of nitrate, benzoate, 2-hydroxy-2-phosphonoacetic acid and its salts and/or 2-phosphono-1,2,4-tricarboxybutane and its salts) biocides (eg. tetrakis (hydroxymethyl) phosphonium salts, formaldehyde, glutaraldehyde); oxidising biocides and/or bleaches (e.g chlorine, chlorine dioxide, hydrogen peroxide, sodium perborate); foam controlling agents such as silicone antifoams; oxygen scavengers such as hydrazines and/or hydroxylamines; pH controlling and/or buffering agents such as amines, borates, citrates and/or acetates; chromium salts; zinc salts; and/or other water treatment agents such as polymeric dispersants and coagulants including polymaleic, polyacrylic and polyvinylsulphonic acids and their salts, starches and/or carboxy methyl cellulose, and/or molybdates.

The invention provides formulations comprising an effective amount of a mixture or product of the invention as aforesaid and any of the aforesaid known water treatment agents. Such formulations may, for example, contain from 5 to 95% by weight of a product of the invention and from 5 to 90% by weight of one or more of any of the aforesaid water treatment agents. Additionally the formulations may contain up to 90% of a diluent, filler or solvent.

The invention, according to a further embodiment provides aqueous, solutions containing from 0.5ppm to saturation of any of the aforesaid products mixtures or formulations according to the invention.

The invention is illustrated by the following examples :-

### Example 1

A solution of phosphorous acid (4.0 mol; 328.0 g) and fumaric acid (4.0 mol; 464.3 g) in water (800 ml) was stirred rapidly to form an even paste 50% wt sodium hydroxide was added over 1 hour, (16 mole eq; 1280 g).

The solution (adjusted to pH10), was reduced to a 65% slurry, by distillation of water, using Dean Stark apparatus, (1172 g) and heated at reflux for 30 mins.

A 2.5% v/v solution of hydrogen peroxide was added under an atmosphere of nitrogen to the reactants at reflux at an initial rate of 25 cm³ hr⁻¹ with co-distillation of water to maintain a 65% slurry. After 8-9 hours the rate was reduced to 10 cm³ hr⁻¹. Following a further 10 hours addition of peroxide at reflux, (total addition time 19 hrs), 600 cm³ of water was added to the reaction mixture and heated at reflux for 30 mins, cooled to 10°C and filtered through a sinter (grade 3) to remove residual insoluble disodium fumarate. ³¹P NMR (in D₂0) indicated 95% conversion to the tetrasodium salt of phosphonosuccinic acid.

A 52% w/w solution of the product separated by ion chromatography comprised 45.4% w/w phosphonosuccinic acid, 0.72% dimer, 2.3% phosphate, 0.2% phosphite and 0.4% maleate.

### Example 2

The following were charged to a reaction vessel: 1 litre water, 57.1 g product of Example 1 (40% solution), fumaric acid (464.0g, 4 moles), phosphorous acid (327.0g, 3.99 moles). This was then neutralised with 1226.7g sodium hydroxide (50%), and the pH adjusted to 10.1.

1335ml water then removed by distribution to give a slurry containing 65% solids. 600mls 2.4% hydrogen peroxide solution then added over 25 hours with water removed from the vesseal by distillation at the same rate as this addition.

This gave a 95% conversion to phosphonosuccinate.

The product had a crystal size of 10 to 20 microns and low viscosity.

### Example 3

1849g product of example 1 (40% solution), fumaric acid (300g, 2.58 moles) and phosphorous acid (212g, 2.58 moles) were charged to a reaction vessel. These are neutralised and the pH adjusted to 10.1 with 827.1g sodium hydroxide solution (50%). 913g water were then removed by distillation to give a slurry containing 65% solids. 600mls of 2.5% hydrogen peroxide solution then added over 25 hours. The product had an average crystal size less than 5 microns and was very viscous.

### Example 4

The product of example 1 was compared with phosphonosuccinate obtained by the saponification of the methyl ester resulting from the reaction of methyl phosphate with methyl maleate. The comparison was made using coupon tests which involved immersing weighed mild steel coupons in water containing varying concentrations of calcium over a range of pH. The weight loss was measured and corrosion calculated in mils per year. The results are set out in the following table.

**TABLE**

| Conditions | | | Corrosion rate mm per year | |
|---|---|---|---|---|
| Inhibitor (ppm expressed as acid) | CaC0₃(ppm) | pH | Example 1 | Comparative Example |
| 5 | 0 | 7.0 | 0.009 | 0.013 |
| 5 | 10 | 7.0 | 0.031 | 0.031 |
| 10 | 25 | 7.5 | 0.039 | 0.043 |
| 10 | 50 | 7.5 | 0.038 | 0.057 |
| 10 | 100 | 8 | 0.055 | 0.060 |
| 10 | 250 | 8 | 0.038 | 0.065 |
| 20 | 500 | 8.5 | 0.034 | 0.043 |
| 20 | 1,000 | 8.5 | 0.026 | 0.037 |

### Example 5

The product of Example 1 was compared, in a tube blocking experiment, with the product of phosphonating sodium maleate as described in EP-A-056973. Water at 60°C containing 600ppm calcium expressed as carbonate equivalent and 450ppm HC0₃⁻ expressed as calcium carbonate equivalent (Langelier index 2.6) and having pH at 20°C of 9, was pumped through a stainless steel capillary for 3,500 seconds and the pressure differential measured. The onset of scaling was registered as a rise in pressure, which became exponential as the tube blocked.

With 0.5ppm of the comparative example, blocking occurred after 2,500 seconds. With the same concentration of Example 1 only partial blocking was observed even after 3,500 seconds. At 1ppm inhibitor both products were effective in prevent blockage throughout the test.

### Example 6

The deflocculating ability of the product of Example 1 was compared with that of a phosphite/maleate reaction product according to the example of EP-A-0569731 which had a degree of polymerisation of 1.3. The two products were each added to samples of a 65% by weight suspension of titanium oxide in water at a level of 0.1% by weight of the sample.

The viscosities of the two samples were measured at 25° and 21 sec⁻¹ using a "Carrimed" controlled stress rheometer with 4cm parallel plates and 1mm gap.

The fumarate product of Example 1 lowered the viscosity from 10.88 Pas to 0.153 Pas. The maleate product of the prior art only lowered the viscosity to 0.336 Pas

## Claims

**1.** A method of making a water treatment agent which comprises reacting a water soluble phosphite salt with a water soluble fumarate salt in water in the presence of a free radical initiator.

**2.** A method according to claim 1 in which the initiator is added to the mixture of phosphite and fumarate at a rate and for a time sufficient to form a yield of phosphonosuccinate greater than 80% based on the weight of phosphite employed but not sufficiently rapidly to form more than 8% phosphate.

**3.** A method according to claim 2 wherein the free radical initiator is hydrogen peroxide.

**5.** A mixture of a phosphonosuccinate salt with from 0.1 to 5% by weight based on the total weight of the mixture of a 1-phosphono-1,2,3,4-tetracarboxy butane salt.

**6.** A mixture according to claim 5 containing less than 8% by weight of phosphate.

**7.** A method of treating water systems to inhibit corrosion of metals and/or deposition of scale which comprises adding thereto from 0.1 to 300 ppm of a mixture according to either of claims 5 and 6.

**8.** A method of inhibiting flocculation of a dispersion or suspension of particulate solids in liquid medium which comprises adding thereto a deflocculant amount of a mixture according to either of claims 5 and 6.

**9.** A detergent formulation comprising from 0.01 to 20% by weight of a mixture according to either of claims 5 and 6.

**10.** A suspension of particles of a flocculable solid in water containing a flocculation inhibiting amount of a mixture according to either of claims 5 and 6.
